# EUROPÄISCHE PATENTSCHRIFT

(11) **EP 0 790 699 B1**
(45) Veröffentlichungstag und Bekanntmachung des Hinweises auf die Patenterteilung: **21.06.2006**
(21) Anmeldenummer: 97102146.4
(22) Anmeldetag: 11.02.1997
(51) Int. Cl.: H02P 7/00

(54) **Verfahren zum Ansteuern eines Gleichstrommotors und Vorrichtung zur Durchführung dieses Verfahrens**
DC motor control method and apparatus for operating the method
Méthode pour alimenter un moteur à courant continu et appareil pour la mise en oeuvre de cette méthode

(30) Priorität: 16.02.1996 DE 19605834
(43) Veröffentlichungstag der Anmeldung: 20.08.1997
(73) Patentinhaber: SIEMENS AKTIENGESELLSCHAFT, 80333 München (DE)
(72) Erfinder: Heine, Martin, Dr., 93102 Geisling (DE); Fisch, Alfons, 93167 Falkenstein (DE); Maier, Theodor, 84089 Aiglsbach (DE); Göser, Gerhard, 93080 Pentling (DE)

(56) Entgegenhaltungen:
- EP-A- 0 160 896
- EP-A- 0 578 098
- DE-A- 4 038 199
- DE-B- 1 130 042
- US-A- 5 257 175
- BUCKSCH W ET AL: "DIREKTER RELAIS-ERSATZ MONOLITHISCHER H-BRUECKENTREIBER MIT SCHUTZ- UND DIAGNOSESCHALTUNGEN" ELEKTRONIK, Bd. 42, Nr. 13, 29.Juni 1993, Seiten 86-88, 90, XP000378374

## Beschreibung

Die Erfindung betrifft eine Vorrichtung zum Ansteuern eines Gleichstrommotors über eine integrierte H-Brückenschaltung, insbesondere in Kraftfahrzeugen, gemäß dem Oberbegriff von Patentanspruch 1.

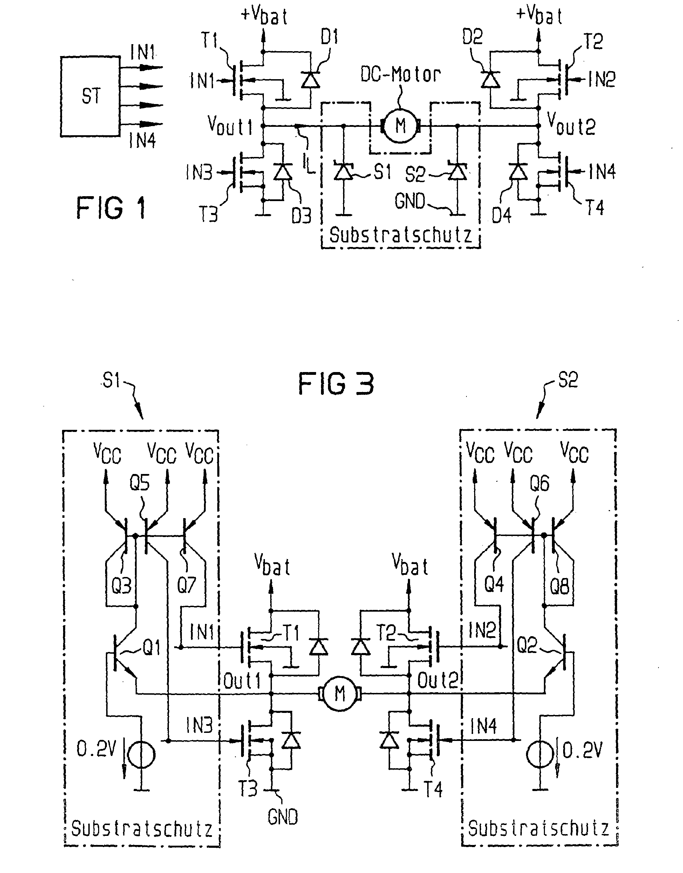

Integrierte H-Brücken bestehen aus vier monolithisch integrierten Transistoren T1 bis T4 (Figur 1). Je nach Drehrichtung des Motors M sind entweder die Transistoren T1 und T4 oder T2 und T3 leitend. Beim Abschalten oder beim Umschalten treten aufgrund der in der Induktivität des Motors gespeicherten Energie an den Motoranschlüssen Out1 oder Out2 negative Potentialspitzen Vₒᵤₜ₁ bzw. Vₒᵤₜ₂ auf, die das Massepotential (GND) der Betriebsspannung unterschreiten und sog. Substratströme (auf dem Substrat der integrierten Schaltung) hervorrufen können, was zum Ausfall ganzer Funktionsteile der integrierten Schaltung führen kann.

Bisher wurden externe Schutzdioden verwendet, deren Diffusionsspannung unterhalb der Diffusionsspannung der parasitären Substratdioden der integrierten Schaltung liegen. Üblicherweise wurden hierfür teure, nicht integrierte Schottky-Diöden verwendet (SD1, SD2 in Figur 1)

Aus DE-AS 11 30 042 ist eine Schaltung zum Ansteuern eines Gleichstrommotors über eine H-Brückenschaltung bekannt, die als Schutz vor schädlichen Induktionsspitzenspannungen Zenerdioden verwendet, die zu den mit dem Pluspol der Betriebsspannung verbundenen Leistungstransistoren in Sperrichtung parallel geschaltet sind. Bei schwankenden Betriebsspannungen, wie sie beispielsweise in Kraftfahrzeug-Bordnetzen auftreten, können Substratströme auf integrierten Schaltungen damit nicht vermieden werden.

Aus DE 40 38 199 A1 ist eine Schaltungsanordnung zum Ansteuern eines Gleichstrommotors über eine H-Brückenschaltung bekannt, die zum Begrenzen transienter Spannungs- und/oder Stromspitzen beim Ein-, Aus- oder Umschalten des Motors vorsieht, einen Transistor im gerade geöffneten Strompfad getaktet zu betreiben oder den Motor über beide mit dem gleichen Pol der Betriebsspannung verbundenen Transistoren kurzzuschließen. Auch damit lassen sich negative Spannungen nicht auf einen Wert begrenzen, der die Substratdioden nichtleitend hält.

US 5,257,175 offenbart ein analoges Kontrollsystem für induktive Rücklaufspannungen beim Schalten einer in der Diagonale einer H-Brückenschaltung angeordneten induktiven Last, um Substratströme zu verhindern. Dies soll durch Begrenzung der an der Last auftretenden Spannungen auf einen vorgegebenen Wert erfolgen. Bei Überschreiten dieses Wertes wird der Lowside-Transistor, bei Unterschreiten der Highside-Transistor leittend gesteuert.

In DE-Z "Elektronik", Bd.42, Nr. 13 vom 29. Juni 1993, Seiten 86-88 wird ein monolithischer H-Brückentreiber als direkter Relais-Ersatz beschrieben, welcher zusammen mit diversen Schutzschaltungen für Strom, Spannung, Temperatur etc. auf einem Substrat integriert ist.

Es ist Aufgabe der Erfindung, integrierte H-Brücken vor solchen durch Spannungsspitzen an den Motoranschlüssen auftretenden Substratströmen besser und preiswerter zu schützen und die Verlustleistung beim Ein- und Umschalten zu verringern.

Diese Aufgabe wird erfindungsgemäß durch die Merkmale des Anspruchs 1 gelöst. Eine vorteilhafte Ausgestaltung der Erfindung ist den Unteransprüchen zu entnehmen.

Ein Ausführungsbeispiel der Erfindung wird im folgenden unter Bezugnahme auf die schematische Zeichnung näher erläutert.

Es zeigen:
Figur 1: eine bekannte H-Brückenschaltung;
Figur 2: die Strom- und Spannungsverläufe dazu;
Figur 3: die erfindungsgemäße H-Brückenschaltung; und
Figur 4: die Strom- und Spannungsverläufe dazu.

Figur 1 zeigt einen Gleichstrom-Elektromotor M mit einer bekannten H-Brückenschaltung, deren Transistorschalter T1 bis T4 von einer nicht näher ausgeführten Steuerschaltung ST angesteuert werden.

Diese bekannte H-Brückenschaltung besteht
- aus je einem Feldeffekt-Transistor als highside-Transistorschalter T1, T2 zwischen jedem Motoranschluß Out1, Out2 und dem Pluspol +V_{bat} einer Betriebsspannung,
- aus je einem Feldeffekt-Transistor als lowside-Transistorschalter T3, T4 zwischen jedem Motoranschluß Out1, Out2 und dem Minuspol GND der Betriebsspannung,
- aus je einer zu den Schaltstrecken der Transistorschalter T1 bis T4 parallelgeschalteten Diode D1 bis D4, die in Richtung vom Minuspol GND weg bzw. zum Pluspol +V_{bat} hin stromdurchlässig ist, und
- aus je einer jedem Motoranschluß Out1, Out2 zugeordneten Schutzschaltung S1, S2 zum Verhindern des Auftretens von schädlichen Substratströmen, die bisher beispielsweise aus teuren externen, d.h., nicht integrierten Schottky-Dioden bestand.

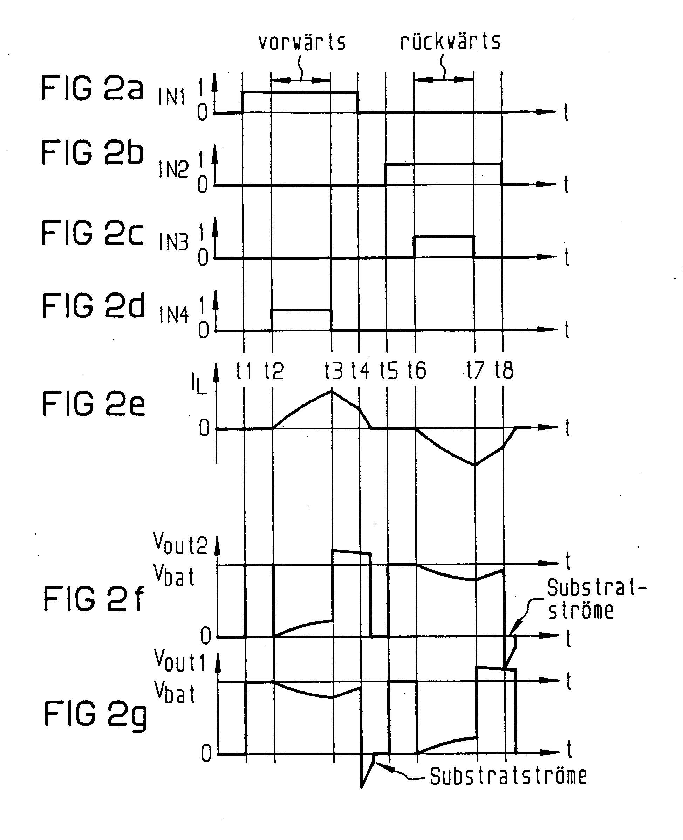

In Figur 2a bis g sind die Strom- und Spannungsverläufe ih dieser bekannten H-Brückenschaltung und im Gleichstrommotor M für beide Motor-Drehrichtungen dargestellt. Für die eine Drehrichtung "vorwärts",für welche die Strom- und Spannungsverläufe nachstehend erläutert werden (für die andere Drehrichtung ergibt sich der gleiche Verlauf) wird zunächst im Zeitpunkt t1 Transistorschalter T1 durch die Steuerschaltung ST digital leitend gesteuert (durch Anlegen eines Steuersignals an den Eingang IN1, d.h., an den Gateanschluß des Feldeffekt-Transistorschalters T1), Figur 2a, und anschließend im Zeitpunkt t2 Transistorschalter T4, Figur 2d. Jetzt fließt ein Motorstrom I_{L} (Figur 2e) vom Pluspol +V_{bat} der Batteriespannung über T1, den Motor M und T4 zum Minuspol GND; der Motor dreht "vorwärts", bis im Zeitpunkt t3 der Transistorschalter T4 durch die Steuerschaltung ST wieder nichtleitend gesteuert wird. Der Motorstrom I_{L} fließt jetzt vom Pluspol +V_{bat} über T1, den Motor M und die Diode D2 nach +V_{bat} zurück und nimmt dabei ab (Abbau der restlichen in der Motorinduktivität gespeicherten Energie), bis im Zeitpunkt t4 die Steuerschaltung ST auch den Transistorschalter T1 wieder nichtleitend steuert. Jetzt fließt der Strom vom Minuspol GND über Diode D3, den Motor M und die Diode D2 zum Pluspol +V_{bat} und nimmt dabei schnell ab.

Insbesondere durch das versetzte Ausschalten von T1 und T4 sollen Substratströme, die ab dem Zeitpunkt t4 (bzw. t8 bei Drehrichtung "rückwärts") auftreten, vermindert werden, die dadurch hervorgerufen werden, daß beim Ab- oder Umschalten aufgrund der in der Induktivität des Motors M gespeicherten Energie negative Potentialspitzen auftreten, Figur 2f, die zwar durch die parasitären Substratdioden auf etwa 0,7V begrenzt werden. Dadurch werden diese Substratdioden aber leitend, wodurch Substratströme fließen können. Um dies zu verhindern, wurden bisher nicht integrierte Schottky-Dioden (S1 und S2 zwischen dem Minuspol GND und den Motoranschlüssen Out1 und Out2, Figur 1) eingesetzt, welche diese Spannungsspitzen auf kleinere Werte als 0,7V begrenzten und dadurch den leitenden Zustand der Substratdioden und Substratströme verhinderten.

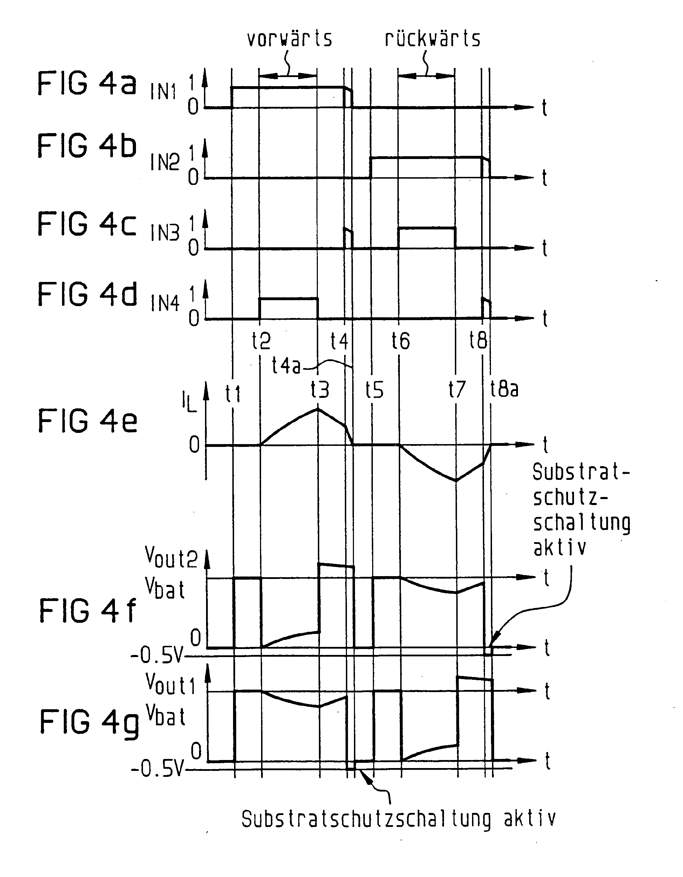

In Figur 3 ist der Motor M mit der H-Brückenschaltung entsprechend Figur 1, jedoch ohne die ebenfalls erforderliche Steuerschaltung ST dargestellt; wobei gleiche Bauteile mit den gleichen Bezugszeichen versehen sind.

Die Schottky-Dioden S1 und S2 aus Figur 1 werden durch nachstehend beschriebene Schutzschaltungen S1 und S2 ersetzt, von denen wegen des gleichen Aufbaus und gleicher Funktion wieder nur S1 beschrieben wird.

Die Schutzschaltung S1, die vorteilhaft auf dem Substrat der H-Brückenschaltung mitintegriert sein kann, weist einen mit einer vorgegebenen Basisspannung V_{b1} von beispielsweise +0,2V vorgespannten npn-Bipolartransistor Q1 auf, dessen Emitter mit dem Motoranschluß Out1 verbunden ist und dessen Kollektor mit Basis und Kollektor eines pnp-Bipolartransistors Q3 verbunden ist, welcher Teil einer Stromspiegelschaltung ist, die aus den pnp-Bipolartransistoren Q3, Q5 und Q7 beteht, deren Emitteranschlüsse sämtlich mit dem Pluspol der Versorgungsspannung Vcc der Schutzschaltung S1 verbunden sind. Diese Versorgungsspannung kann von der Betriebsspannung V_{bat} abweichen, beispielsweise V_{bat} = 12V; V_{cc} = 16V.

Die Basisanschlüsse der Transistoren Q3, Q5 und Q7 sind miteinander verbunden. Der Kollektor des Transistors Q5 ist mit dem Eingang IN3 der H-Brückenschaltung verbunden und der Kollektor des Transistors Q7 ist mit dem Eingang IN1 der H-Brükkenschaltung verbunden.

In Figur 4a bis g sind die Strom- und Spannungsverläufe in der erfindungsgemäßen H-Brückenschaltung und im Gleichstrommotor M für die beiden Motor-Drehrichtungen dargestellt. Das Ein- und Ausschalten der Transistoren T1 und T4 durch die Steuerschaltung im Zeitraum t1 bis t4 erfolgt genauso wie bei dem Ausführungsbeispiel nach Figur 2.

Im Zeitpunkt t4, wenn Transistor T1 nichtleitend gesteuert wird, entstehen am Motoranschluß Out1 wieder negative Spannungsspitzen. Sobald diese aber einen Wert von etwa -0,5v (Basisvorspannung 0,2V - 0,7V Basis-Emitterdiodenspannung am Transistor Q1) unterschreiten, wird Transistor Q1 leitend. Dadurch fließt ein Strom von V_{cc} über die Kollektor-Emitterstrecken von Q3 und Q1 zum Motoranschluß Out1, der gleich große oder proportionale Ströme in den Kollektor-Emitterstrecken der Transistoren Q5 und Q7 hervorruft.

Über die durch die Kollektor-Emitterstrecken der Transistoren Q5 und Q7 in die Steuereingänge der Transistorschalter T1 und T3 fließenden Ströme werden die Transistorschalter T1 und T3 leitend gehalten (geregelt!). Dies führt zu einem gleichzeitigen Stromfluß durch den highside- und lowside-Transistorschalter T1 und T3 in den Motoranschluß Out1. Durch diese Aufteilung des Stromes kann die Verlustleistung geringer gehalten werden, als wenn nur einer der beiden Transistorschalter, von der Schutzschaltung leitend gesteuert wird. Die Summe beider Ströme I₁ + I₂ fließt durch den Motor M.

Der lowside-Transistorschalter T3 liefert einen Strom I₁ = 0,5V/R_{DSon} (R_{DSon} = Widerstand des leitenden Transistorschalters), während der über den highside-Transistorschalter T1 fließende Strom I₂ über die Ansteuertransistoren so eingestellt wird, daß im Grenzfall die zulässige Verlustleistung Pₘₐₓ nicht überschritten wird: I₂ₘₐₓ = Pₘₐₓ/(V_{bat} + 0, 5V).

Die Transistorschalter T1 und T3 bleiben so lange leitend, bis die negativen Spannungen am Motoranschluß Out1, die durch diese Maßnahme auf den Wert -0,5V begrenzt werden (wodurch die parasitären Substratdioden gesperrt bleiben und keine Substratströme fließen können), zum Zeitpunkt t4a wieder grö-βer als -0,5V werden. In diesem Augenblick werden Q1, Q3, Q5 und Q7 wieder nichtleitend und T1 und T3 übernehmen die von der Steuerschaltung vorgegebene Funktion.

Gleiche wie die beschriebenen Vorgänge ergeben sich, wenn der Motor in Drehrichtung "rückwärts" betrieben wird, Zeitpunkte t5 bis t8a in Figur 4, jedoch mit anderen Bezugszeichen:

| | |
|---|---|
| Out1 wird zu Out2, | Q1 wird zu Q2, |
| T1 wird zu T2, | Q3 wird zu Q8, |
| T4 wird zu T3, | Q5 wird zu Q6, |
| T3 wird zu T4, | Q7 wird zu Q4. |

## Patentansprüche

1. Vorrichtung zum Ansteuern eines Gleichstrommotors (M) über eine integrierte H-Brückenschaltung mittels einer Steuerschaltung (ST), bestehend aus
je einem highside-Transistorschalter (T1, T2) zwischen jedem Motoranschluß (Out1, Out2) und dem Pluspol (+V_{bat}) einer Betriebsspannung,
je einem lowside-Transistorschalter (T3, T4) zwischen jedem Motoranschluß (Out1, Out2) und dem Minuspol (GND) der Betriebsspannung, und
je einer jedem Motoranschluß (Out1, Out2) zugeordneten Schutzschaltung (S1, S2) zum Verhindern des Auftretens von schädlichen Substratströmen,
**dadurch gekennzeichnet ,**
**daß** die Schutzschaltung (S1, S2) einen mit einer vorgegebenen Basisspannung (V_{b1}, V_{b2}) vorgespannten Transistor (Q1, Q2) aufweist, dessen einer Anschluß (E_{Q1}, E_{Q2}) mit dem zugeordneten Motoranschluß (Out1, Out2) verbunden ist, und eine Stromspiegelschaltung (Q3-Q5-Q7; Q4-Q6-Q8) aufweist,
**daß** der Eingangspfad (Q3, Q8) der Stromspiegelschaltung mit dem anderen Anschluß (C_{Q1}, C_{Q2}) des vorgespannten Transistors (Q1, Q2) verbunden ist, und
**daß** der eine Ausgang (Q7,Q4) der Stromspiegelschaltung mit dem Steuereingang (IN1,IN2) des mit dem zugeordneten Motoranschluß (Out1, Out2) verbundenen highside-Transistorschalters (T1, T2), und der andere Ausgang (Q5, Q6) mit dem Steuereingang (IN3, IN8) des mit dem zugeordneten Motoranschluß (Out1, Out2) verbundenen lowside-Transistorschalters (T3, T4) derart verbunden ist, daß sowohl der einem Motoranschluß (Out1, Out2) zugeordnete highside-Transistorschalter (T1, T2) als auch der diesem Motoranschluß (Out1, Out2) zugeordnete lowside-Transistorschalter (T3, T4) gleichzeitig über die Schutzschaltung (S1, S2) in den leitenden Zustand gesteuert oder geregelt werden, wenn und solange das Potential (Vₒᵤₜ₁, Vₒᵤₜ₂) an diesem Motoranschluß (Out1, Out2) einen vorgegebenen Wert (V_{b1}-0, 7V, V_{b2}-0,7V) unterschreitet.

2. Vorrichtung nach Patentanspruch 1, **dadurch gekennzeichnet, daß** der vorgespannte Transistor (Q1, Q2) leitend wird, wenn und solange das Potential (Vₒᵤₜ₁, Vₒᵤₜ₂) an dem mit ihm verbundenen Motoranschluß (Out1, Out2) einen Wert (V_{b1}- 0,7V, V_{b2}- 0, 7V) der vorgegebenen Basisspannung (V_{b1}, V_{b2}) dieses Transistors (Q₁, Q2), vermindert um dessen Basis-Emitterspannung, unterschreitet, und
daß der vorgespannte Transistor (Q1, Q2) in leitendem Zustand die zugeordnete Stromspiegelschaltung (Q3-Q5-Q7; Q4-Q6-Q8) aktiviert, deren Ausgangsströme die mit dem zugeordneten Motoranschluß (Out1, Out2) verbundenen Transistorschalter (T1 und T3 oder T2 und T4) gleichzeitig in den leitenden Zustand steuern oder regeln.

3. Vorrichtung nach Patentanspruch 1 oder 2, **dadurch gekennzeichnet,**
**daß** die Stromspiegelschaltung (Q3-Q5-Q7; Q4-Q6-Q8) so justiert ist, daß
- durch die lowside-Transistorschalter (T3, T4) ein Strom
- I = (V_{b1}-0,7V) /R_{DSon} fließt, mit R_{DSon} = Widerstand des leitenden Transistorschalters, und
- durch die highside-Transistorschalter (T1, T2) höchstens ein Strom Iₘₐₓ fließt, durch den deren zulässige Verlustleistung nicht überschritten wird.

4. Vorrichtung nach Patentanspruch 1, **dadurch gekennzeichnet, daß** die Schutzschaltung (S1, S2) auf der integrierten H-Brükkenschaltung mitintegriert ist.

## Claims

1. Apparatus for controlling a DC motor (M) via an integrated H-bridge circuit by means of a control circuit (ST), consisting of
one highside transistor switch (T1, T2) in each case between each motor terminal (Out1, Out2) and the plus pole (+V_{bat}) of an operating voltage,
one lowside transistor switch (T3, T4) in each case between each motor terminal (Out1, Out2) and the minus pole (GND) of an operating voltage, and
a protection circuit (S1, S2) assigned to each motor connection (Out1, Out2) to prevent damaging substrate currents from occurring,
**characterized in that**
the protection circuit (S1, S2) features a transistor (Q1, Q2) biased with a predetermined basic voltage (V_{b1}, V_{b2}) of which one terminal (E_{Q1}, E_{Q2}) is connected to the assigned motor terminal (Out1, Out2) and features a current balancing circuit (Q3-Q5-Q7; Q4-Q6-Q8),
the input path (Q3, Q8) of the current balancing circuit is connected to the other terminal (C_{Q1}, C_{Q2}) of the biased transistor (Q1, Q2), and
one output (Q7,Q4) of the current balancing circuit is connected to the control input (IN1, IN2) of the highside transistor switch (T1, T2) connected to the assigned motor terminal (Out1, Out2) and the other output (Q5, Q6) to the control input (IN3, IN8) of the lowside transistor switch (T3, T4) is connected to the assigned motor terminal (Out1, Out2) in such a way that both the highside transistor switch (T1, T2) assigned to the one motor terminal (Out1, Out2) and also the lowside transistor switch (T3, T4) assigned to this motor terminal (Out1, Out2) are simultaneously controlled or regulated via the protection circuit (S1, S2) to put them into the conducting state, if and for as long as the potential (Vₒᵤₜ₁, Vₒᵤₜ₂) at this motor terminal (Out1, Out2) is below a predetermined value (V_{b1} - 0.7V, V_{b2} - 0.7V) .

2. Apparatus in accordance with claim 1, **characterized in that** the biased transistor (Q1, Q2) becomes conductive if and while the potential (Vₒᵤₜ₁, Vₒᵤₜ₂) at the motor terminal connected to it (Out1, Out2) is less than a value (V_{b1} - 0.7V, V_{b3} - 0.7V) of the predetermined bias voltage (V_{b1}, V_{b2}) of this transistor (Q1, Q2), reduced by its basic emitter voltage, and
the prebiased transistor (Q1, Q2) in the conducting state activates the assigned current balancing circuit (Q3-Q5-Q7; Q4-Q6-Q8), of which the output currents simultaneously control or regulate the transistor switch (T1 and T3 or T2 and T4) connected to the assigned motor terminal (Out1, Out2) into the conducting state.

3. Apparatus in accordance with claim 1 or 2, **characterized in that**,
the current balancing circuit (Q3-Q5-Q7;Q4-Q6-Q8) is adjusted so that
- a current
- I = (V_{b1}-0.7V) /R_{DSon} flows through the low-side transistor switch (T3, T4), with R_{DSon} = resistance of the conducting transistor switch, and
- a maximum current Iₘₐₓ flows through the highside transistor switch (T1, T2) through which it permissible power dissipation is not exceeded.

4. Apparatus in accordance with claim 1, **characterized in that** the protection circuit (S1, S2) is also integrated on the integrated H-bridge circuit.

## Revendications

1. Dispositif pour commander un moteur à courant continu (M) à travers un circuit en pont en H intégré, au moyen d'un circuit de commande (ST), composé de
un transistor interrupteur côté haut (T1 T2) entre chaque connexion de moteur (Out1, Out2) et le pôle PLUS (+ V_{bat}) d'une tension de service,
un transistor interrupteur côté bas (T3, T4) entre chaque connexion de moteur (Out1, Out2) et le pôle MOINS (GND) de la tension de service, et
un circuit de protection (S1, S2) associé à chaque connexion de moteur (Out1, Out2) pour empêcher l'apparition de courants de substrat préjudiciables,
**caractérisé**
**en ce que** le circuit de protection (S1 et S2) présente un transistor (Q1, Q2) polarisé par une tension de base prédéterminée (V_{b1}, V_{b2}), dont une connexion (E_{Q1}, E_{Q2}) est reliée à la connexion de moteur correspondante (Out1, Out2), et un circuit à miroir de courant (Q3-Q5-Q7 ; Q4-Q6-Q8),
**en ce que** le trajet d'entrée (Q3, Q8) du circuit à miroir de courant est relié à l'autre connexion (C_{Q1}, C_{Q2}) du transistor polarisé (Q1, Q2), et
**en ce que** la première sortie (Q7, Q4) du circuit à miroir de courant est reliée à l'entrée de commande (IN1, IN2) du transistor interrupteur côté haut (T1, T2) relié à la connexion de moteur correspondante (Out1, Out2) et que l'autre sortie (Q5, Q6) est reliée à l'entrée de commande (IN3, IN8) du transistor interrupteur côté bas (T3, T4) relié à la connexion de moteur correspondante (Out1, Out2), de telle manière qu'aussi bien le transistor interrupteur côté haut (T1 T2) correspondant à l'une des connexions du moteur (Out1, Out2) que le transistor interrupteur côté bas (T3, T4) correspondant à cette connexion de moteur (Out1, Out2) sont commandés ou réglés simultanément sur l'état conducteur au moyen du circuit de protection (S1, S2), lorsque et aussi longtemps que le potentiel (Vₒᵤₜ₁, Vₒᵤₜ₂) présent à cette connexion de moteur (Out1, Out2) est inférieur à une valeur prédéterminée (V_{b1} - 0, 7V, V_{b2} - 0, 7V) .

2. Dispositif selon la revendication 1, **caractérisé en ce que** le transistor polarisé (Q1,Q2) devient conducteur lorsque, et aussi longtemps que, le potentiel (Vₒᵤₜ₁, Vₒᵤₜ₂) présent à la connexion de moteur (Out1, Out2) qui y est reliée est inférieur à une valeur (V_{b1} - 0,7V, V_{b2} - 0,7V) de la tension de base prédéterminée (V_{b1}, V_{b2}) de ce transistor (Q1, Q2) diminuée de la tension base-émetteur de ce dernier, et
**en ce que** le transistor polarisé (Q1, Q2) à l'état conducteur active le circuit à miroir de courant correspondant (Q3-Q5-Q7 ; Q4-Q6-Q8) dont les courants de sortie commandent ou règlent simultanément à l'état conducteur les transistors interrupteurs (T1 et T3 ou T2 et T4) qui sont reliés à la connexion de moteur correspondante (Out1, Out2).

3. Dispositif selon la revendication 1 ou 2, **caractérisé**
**en ce que** le circuit à miroir de courant (Q3-Q5-Q7 ; Q4-Q6-Q8) est ajusté de manière que
- à travers le transistor interrupteur côté bas (T3, T4), circule un courant
- I = (V_{b1}- 0, 7V)/R_{DSon}, avec R_{DSon} = résistance du transistor interrupteur à l'état conducteur et
- à travers les transistors interrupteurs côté haut (T1, T2), circule au maximum un courant Iₘₐₓ , sous l'effet duquel la puissance dissipée admissible de ces transistors n'est pas dépassée.

4. Dispositif selon la revendication 1, **caractérisé en ce que** le circuit de protection (S1,S2) est intégré en même temps sur le circuit en pont en H intégré.
